# EUROPEAN PATENT SPECIFICATION

(11) **EP 2 692 011 B1**
(45) Date of publication and mention of the grant of the patent: **02.09.2015**
(21) Application number: 12712149.9
(22) Date of filing: 20.03.2012
(51) Int. Cl.: H01M 8/24, H01M 8/04, H01M 8/08

(54) **CELL STACK SYSTEM**
ZELLENSTAPELSYSTEM
SYSTÈME D'EMPILEMENT DE CELLULES

(30) Priority: 30.03.2011 GB 201105330
(43) Date of publication of application: 05.02.2014
(73) Proprietor: AFC Energy PLC, Finsgate, London EC1V 9EE (GB)
(72) Inventor: BACKSTROM, Andreas Karl, Surrey GU1 3JZ (GB)
(74) Representative: Mansfield, Peter Turquand
(86) International application number: PCT/GB2012/050600
(87) International publication number: WO 2012/131325

(56) References cited:
- WO-A1-00/36681
- WO-A1-2004/023588
- US-A1- 2003 198 846
- US-A1- 2008 176 115

## Description

The present invention relates to a system that includes several cell stacks, enabling fluids to flow through all the cell stacks.

### Background to the invention

Fuel cells have been identified as a relatively clean and efficient source of electrical power. Alkaline fuel cells are of particular interest because they operate at relatively low temperatures, are efficient and suitable for operation in an industrial environment. Acid fuel cells and fuel cells employing other aqueous electrolytes are also of interest. Such fuel cells typically comprise an electrolyte chamber separated from a fuel gas chamber (containing a fuel gas, typically hydrogen) and a further gas chamber (containing an oxidant gas, usually air). The electrolyte chamber is separated from the gas chambers using electrodes. Typical electrodes for alkaline fuel cells comprise a conductive metal mesh, typically nickel, that provides mechanical strength to the electrode. Onto the metal mesh is deposited a catalyst which may for example contain activated carbon and a catalyst metal such as platinum. A single fuel cell does not produce a large voltage, and it is usually desirable to assemble a number of fuel cells into a stack to provide a larger electrical power output.

For some purposes it may be necessary to assemble a number of such stacks into a system that can provide still greater electrical power output; and in this context there is a problem of providing the electrolyte to each of the stacks, removing electrolyte that has flowed through each cell stack, and supplying gases to each cell stack. For example there may be a requirement to feed electrolyte to and from each stack; to supply air to and from each stack; and to supply fuel gas to and from each stack, so that connections to six fluid supply ducts would be required. When a stack is to be disconnected, all these connections would have to be closed off and disconnected. A simpler connection arrangement would be desirable.

WO 2004/023588 (Richards Engineering) describes a system in which fuel cell modules include a tapered manifold block, so they can mate with a correspondingly-tapered receiver section; the mating faces are flat, and define gas ports and seals, and the angle of taper ensures the seals provide gas tight connection. The receiver section incorporates spring-loaded valves with plunger actuators which are engaged on insertion of the fuel cell module, so as to provide gas flows to or from the ports. US 2008/0176115 (Yamamiya) describes a residual capacity detector for a fuel cell stack; the fuel cell system may include a pressure sensor, an on/off valve and a pressure regulating valve connecting a fuel tank to a fuel cell. WO 00/36681 (Hockaday) describes a fuel cell system in which fuel cell modules may be connected to a common bus structure; each module includes generally cylindrical connectors which can plug into mating holes, the connector sealing with an O-ring seal on the cylindrical surface, and opening a valve to make communication with a fuel gas channel in the bus structure. US 2003/0198846 (Franklin) describes a fuel cell system combining a fuel cell stack, a mounting plate and at least two fuel supply units; each fuel supply unit is connected through a respective self-sealing valve to the mounting plate, so a fuel supply unit can be removed and reinstalled during operation.

### Discussion of the invention

The system of the present invention addresses or mitigates one or more problems of the prior art.

In accordance with the present invention there is provided a system for supplying and removing a plurality of fluids to and from a cell stack that forms part of the system, wherein the cell stack comprises a plurality of fluid connection ports; and the system also comprises a connection module defining a plurality of connection ports to mate with the connection ports of the cell stack, with a fluid duct communicating with each connection port of the connection module, there being a plurality of ducts to feed fluids to the cell stack, and with a valve in each fluid feed duct to control fluid flow through that duct, *characterised in that* the connection ports comprise push-in male and female connectors, wherein the female connector locates the male connector while allowing limited misalignment, the female connector also defining a flat sealing surface, and the male connector comprising a sealing element to seal onto the flat sealing surface defined by the female connector.

The system may also comprise a support frame for the cell stack, arranged to support the cell stack with the connection ports of the stack and of the module aligned.

In use, the valves in the fluid ducts would be open during operation of the cell stack. If the cell stack is to be turned off, for example for servicing, all the valves would be closed, and then the cell stack can removed by disconnecting the connection ports of the stack and of the module. This is simplest in the case of push-in connectors.

In a preferred arrangement each valve is automated, and linked so all the valves can be opened or closed together. Each cell stack may comprise an electronic monitor, to monitor operation of each cell in the stack, and to ensure safe operation. If the electronic monitor determines that the cell stack should cease operation, the monitor preferably controls operation of the valves. In a preferred arrangement the valves are operated pneumatically, and the electronic controller thereby controls operation of the valves.

The connection ports of the stack and of the module comprise face seals that seal onto a flat surface. In a context where there are several connection ports to be connected at once, this avoids the requirement for very accurate positioning of the ports relative to each other.

The system is particularly suited to fuel cell stacks, but it may also be utilised with electrolysis cell stacks, for example for electrolysis of water to generate hydrogen and oxygen.

The invention will now be further and more particularly described, by way of example only, and with reference to the accompanying drawings in which:
Figure 1 shows a perspective view of a system of the invention incorporating sixteen fuel cell stack assemblies arranged at four different levels;
Figures 2a and 2b show perspective views of a fuel cell stack assembly on a support, showing a connection means;
Figure 3 shows a perspective view of a connection means for connecting to a fuel cell stack assembly (not within the scope of the invention);
Figure 4 shows a cross-sectional view through the connection means of figures 2a and 2b.

A fuel cell consists of two electrodes, an anode and a cathode, separated by an electrolyte, and each electrode is in contact with a respective gas stream. Chemical reactions that take place at the electrodes cause ions to migrate through the electrolyte, and generate an electric current in an external circuit. It is customary to arrange fuel cells in stacks, to obtain a larger voltage or power output than is available from a single fuel cell. Each such fuel cell stack must be supplied with appropriate fluids. For example the electrolyte may be an aqueous solution of potassium hydroxide (KOH), and the gas streams may be hydrogen, and air or oxygen. In the system described below a KOH electrolyte and an air stream are passed in parallel through the fuel cell stacks, and similarly a hydrogen stream is passed in parallel through the cell stacks.

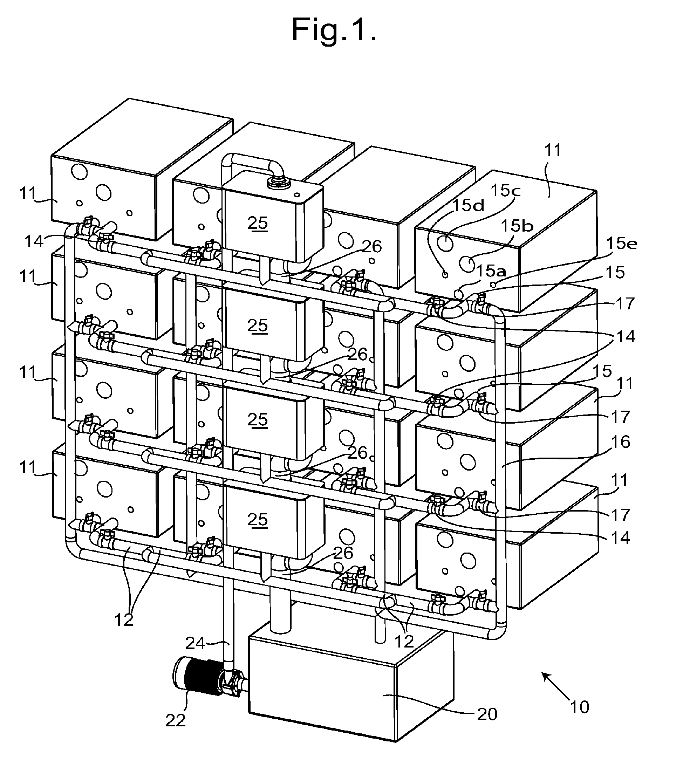

Referring now to figure 1, a system 10 of the invention is shown in which sixteen fuel cell stack assemblies 11 are arranged at four different heights, with four fuel cell stack assemblies 11 at each different height. Ducts 12 are provided to supply electrolyte to an inlet port 15 of each cell stack assembly 11 via a shut-off valve 14 that is normally open. Each fuel cell stack assembly 11 also has an outlet port 15a near its base for electrolyte. Each assembly 11 also has an inlet port 15b for air and an outlet port 15c for air; and an inlet port 15d for hydrogen and an outlet port 15e for hydrogen. The outlet duct for electrolyte, and the inlet and outlet ducts for carrying hydrogen and air are not shown in figure 1, for clarity. Between the shut-off valve 14 and the electrolyte inlet of the assembly 11 is a T-junction, arranged so that a drain pipe 16 branches off from the duct 12, and the drain pipe 16 incorporates a drain valve 17 that is normally closed. The drain pipe 16 extends down to an electrolyte storage tank 20. In operation, if the shut-off valve 14 is closed for any reason, so preventing electrolyte flowing into the assembly 11, then the drain valve 17 would normally be opened to allow electrolyte that is within the module 11 to drain down into the electrolyte storage tank 20. The electrolyte is circulated from the storage tank 20 by a pump 22 through a pipe 24 to a succession of constant head tanks 25 which ensure that the electrolyte pressure is substantially identical for all the stack assemblies 11 at the same height in the system 10, as excess electrolyte overflows through overflow pipes 26 from each constant head tank 25 to the next one down, or in last case into the storage tank 20.

In a modification, instead of the shut-off valve 14 and the drain valve 17, there may instead be a single three-way valve at the T-junction, which combines the effects of these two valves, connecting the inlet port 15 of the assembly 11 either to the electrolyte supply duct 12 or to the drain pipe 16.

It will be appreciated that the system 10 is shown in a simplified form in Figure 1, as there are also outlet ducts 12 for electrolyte, and inlet and outlet ducts 12 for carrying hydrogen and air, each being provided with a cut-off valve, for each assembly 11. These are not shown in figure 1, for clarity, but it will be appreciated that closing down or starting up the operation of one or more assemblies 11 would involve the closing or opening of several valves associated with each assembly.

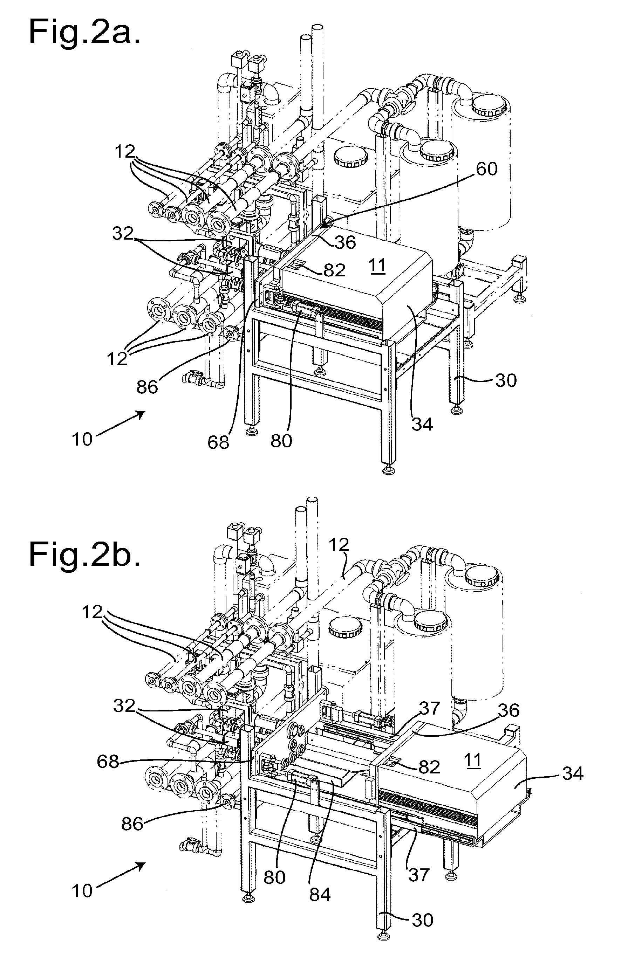

Referring now to figure 2a, part of the system 10 is shown. A single fuel cell stack assembly 11 is shown supported on a frame 30, and connected to feed ducts 12 and return ducts 12. In this case each feed duct 12 is provided with a respective pneumatically-controlled valve 32. As regards the feed ducts for air and hydrogen, the pneumatically-controlled valve 32 is a shut-off valve, whereas for the electrolyte feed duct 12 the pneumatically-controlled valve 32 is a two-way valve, as mentioned above, so that the electrolyte inlet to the assembly 11 communicates either with the feed duct 12 or with the drain duct 16, depending on the setting of the two-way valve.

The fuel cell stack assembly 11 contains a stack of fuel cells within a casing 34. The casing 34 includes an end plate 36 on which the electrolyte, air and hydrogen inlet and outlet ports 15 and 15a to 15e (shown in Figure 1) are defined. These are arranged so that the assembly 11 can be simply removed from the system 10 after actuating all the pneumatically-controlled valves 32. The feed and return ducts 12 connect to the ports 15 and 15a-e by a push fit arrangement, so that, as shown in figure 2b, the assembly 11 can be pulled back, whilst remaining supported by telescopic support rails 37 of the frame 30. When installing an assembly 11, the telescopic support rails 37 guide the push-fit connectors into alignment.

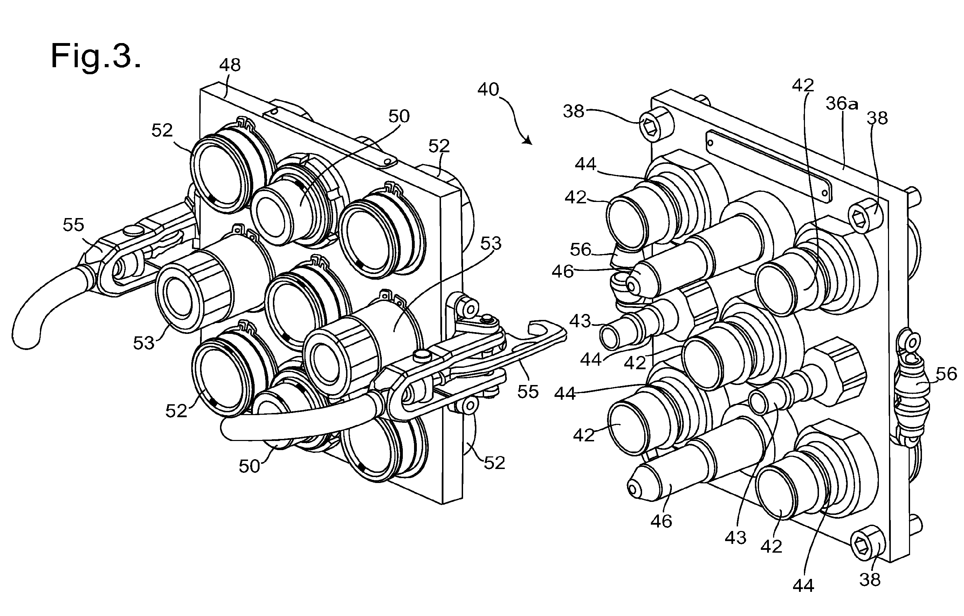

Referring now to figure 3, this shows a perspective view of a first push-fit connection system 40 (not within the scope of the invention). The end plate 36a in this example is shown detached from the casing 34, for clarity, and it would be attached to the casing 34 by bolts 38 at the corners. In this example there are five ports 42 each of diameter 25 mm, arranged at the corners of a square and at the centre of the square; and there are two ports 43 of diameter 10 mm, one on each side of the centre. Each port 42 and 43 comprises a projecting tube with a portion of larger external diameter near the end plate 36a, in which is defined a circumferential groove 44 to locate an O-ring seal (not shown). In addition there are two locating prongs 46 projecting from the end plate, above and below the centre respectively, which extend further than the ports 42 and 43, and taper in a stepwise fashion along their length.

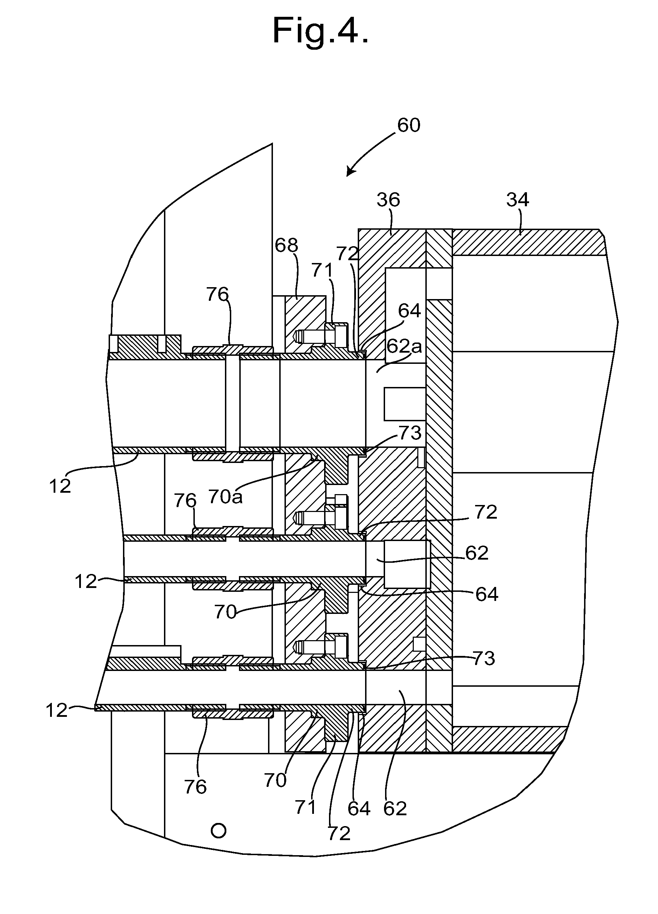

The other half of the push-fit connection system 40 is a connection plate 48 which defines guide apertures 50 to locate the prongs 46, and carries seven female sockets: four female sockets 52 into which the projecting tubes of the ports 42 fit, and two female sockets 53 into which the projecting tubes of the ports 43 fit. The feed and return ducts 12 (shown in Figures 2a and 2b) are attached to the rear face of the connection plate 48, but are not shown in figure 4. In addition manually-operated latching mechanisms 55 are provided, one on each side of the connection plate 48, which latch onto catches 56 fixed to the sides of the end plate 36.

Thus in use, as the cell stack assembly 11 with the end plate 36a is pushed into contact with the connection plate 48, the locating prongs 46 fit into the guide apertures 50, ensuring alignment of the other components. Then the projecting tubes of the ports 42 and 43 slide into the respective sockets 52 and 53, and when the projecting tubes of the ports 42 and 43 are fully inserted into the sockets 52 and 53 the O-ring seals ensure fluid-tight connections. The latching mechanisms 55 would then be operated to hold the end plate 36a securely onto the connection plate 48, and so securing the cell stack assembly 11 into the remainder of the system 10.

After operation of the cell stack assembly 11, if the pneumatically-controlled valves 32 are actuated, then the cell stack assembly 11 can be simply pulled away from the connection plate 48, after releasing the latching mechanisms 55.

It will be appreciated that the first push-fit connection system 40 is shown only by way of example. In this case there are seven ports: hence the fuel cell stack assembly 11 may have an additional drain outlet in addition to the feed and return ducts for electrolyte, air and fuel. To ensure fluid-tight sealing, the ports 42 and 43 must be accurately aligned with the sockets 52 and 53. This may be achieved by manufacturing the end plate 36 and the connection plate 48 to tight tolerances, so ensuring accurate alignment. Alternatively, in at least one of the end plate 36 and the connection plate 48, one or more of the ports 42 and 43 or of the sockets 52 and 53 is mounted by means of a flexible ring, so that it can move into alignment.

Referring now to figure 4, this shows a cross-sectional view through a second push-fit connection system 60, this being the same as shown in figures 2a and 2b. The system 60 includes the end plate 36 of the fuel cell stack assembly 11, and a connection plate 68. The end plate 36 may be of ABS plastic, and defines ports 62 which are cylindrical holes through the end plate 36 and which communicate with flow ducts within the fuel cell stack assembly 11. Each port 62 is surrounded by an annular recess or counterbore 64, each counterbore 64 being of depth 6 mm, and the ends of the counterbores 64 are in a common plane. The end plate 36 defines six ports 62 that provide a fluid passage of internal diameter 25 mm, and one port 62a that provides a fluid passage of internal diameter 65 mm.

The system 60 includes a stainless steel connection plate 68 which defines six holes of diameter 34 mm (aligned with the ports 62 that provide fluid passages of diameter 25 mm), and defines one hole of diameter 76 mm (aligned with the port 62a which provides a 65 mm diameter fluid passage). Short lengths of tube 70 and 70a providing bores of diameters 25 mm and 65 mm respectively are fixed by means of projecting flanges 71 onto the front face of the connection plate 68, the tubes 70 and 70a extending through and projecting beyond the rear face of the connection plate 68, and having a portion of tube 72 projecting beyond the front face of the flanges 71. The tubes 70 and 70a carrying air or fuel may be of stainless steel, while the tubes 70 that carry electrolyte would be of an alkali-resistant alloy such as Inconel (trade mark) if the electrolyte is potassium hydroxide solution. The ends of the projecting tubes 72 are in a common plane, and an O-ring seal 73 of diameter 2.5 mm is fixed onto the end face of each projecting tube 72. The projecting tube portions 72 mate with the counterbores 64, the diameter of the counterbore 64 being 2.5 mm larger than that of the projecting tube portions 72, and the O-ring seals 73 therefore seal onto the ends of the counterbores 64.

To the rear of the connection plate 68, the projecting portions of the tubes 70 and 70a are connected by ABS plastic sockets 76 to feed and return ducts 12 as described previously.

In this system 60 the exact alignment of the tubes 70 with the counterbores 64 into which they fit is less critical than in the system 40 of figure 3, because the sealing occurs at the flat end faces of the tubes 70, by virtue of the O-rings 73. In the system 60, however, it is desirable to ensure that the end faces of the projecting tubes 72 are in a common plane, to within an accuracy of preferably 0.1 mm.

As shown in figure 2a and figure 2b, the connection plate 68 is fixed onto the frame 30, and includes a clamping mechanism 80 by which the end plate 36, and so the assembly 11, is held in position. The clamping mechanism 80 also ensures that the O-ring seals 73 are under sufficient pressure to ensure fluid-tight seals between the projecting tubes 72 and the end plate 36. The clamping mechanism 80 is operated pneumatically.

A multi-contact electrical connector (not shown) plugs into a socket 82 on the top of each fuel cell stack assembly 11, this including leads for the electrical output of the assembly 11. In addition there are leads connecting to each cell within the stack assembly 11, and these leads are connected to a monitor module 84, shown in figure 2b, which is fixed to the frame 30 immediately below the assembly 11. The monitor module 84 monitors the operation of each cell within the stack assembly 11. The monitor module 84 is also connected to a high-pressure airline 86, and it is connected pneumatically to each of the pneumatically-controlled valves 32 and to the pneumatic mechanism of the clamping mechanism 80. There is also an electrical connection (not shown) from a system control unit (not shown) to each monitor module 84.

In operation, the monitor module 84 monitors the output of each cell within the fuel cell stack assembly 11, ensuring that each cell provides an output voltage that is within acceptable limits. If one or more cells are outside acceptable operating limits, then the monitor module 84 can disconnect the assembly 11 from the system 10, so it can be replaced. It achieves this by controlling the pneumatically-controlled valves 32 so as to switch off the supply of air and fuel to the assembly 11, and to switch the electrolyte feed off and to allow electrolyte within the assembly 11 to drain into the drain pipe 16. After a sufficient delay, it then releases the clamping mechanism 80. The cell stack assembly 11 can then be pulled back into the position shown in figure 2b, unplugging the end plate 36 from the projecting tubes 72 of the connection system 60. The fuel cell stack assembly 11 can then be replaced, and the original assembly 11 taken away to be serviced.

It will also be appreciated that the system 10 may be used with electrolysis cell stacks, or with flow batteries.

## Claims

1. A system (60) for supplying and removing a plurality of fluids to and from a cell stack (11) that forms part of the system (60), wherein the cell stack (11) comprises a plurality of fluid connection ports (62, 62a); and the system also comprises a connection module (68) defining a plurality of connection ports (72) to mate with the connection ports (62, 62a, 64) of the cell stack (11), with a fluid duct (12) communicating with each connection port (72) of the connection module (68), there being a plurality of ducts (12) to feed fluids to the cell stack (11), and with a valve (32) in each fluid feed duct (12) to control fluid flow through that duct (12),
***characterised in that*** the connection ports comprise push-in male and female connectors, wherein the female connector (62, 62a, 64) locates the male connector (72) while allowing limited misalignment, the female connector (62, 62a, 64) also defining a flat sealing surface (64), and the male connector (72) comprising a sealing element (73) to seal onto the flat sealing surface (64) defined by the female connector (62, 62a, 64).

2. A system as claimed in claim 1 also comprising a support frame (30, 37) for the cell stack (11), arranged to support the cell stack (11) with the connection ports (62, 62a, 64; 72) of the cell stack (11) and of the connection module (68) aligned.

3. A system as claimed in claim 1 or claim 2 wherein the female connector (62, 62a, 64) provides a recess of diameter 2.5 mm larger than that of the male connector (72).

4. A system as claimed in any one of the preceding claims wherein each valve (32) is operated by an actuator, and linked so all the valves (32) can be opened or closed together.

5. A system as claimed in claim 4 wherein each cell stack (11) comprises an electronic monitor (84), to monitor operation of each cell in the stack (11), and to control operation of the valves (32).

6. A system as claimed in claim 4 or claim 5 wherein the valves (32) are operated pneumatically.

7. A system as claimed in any one of the preceding claims wherein the male connectors (72) have end faces that are in a common plane, to within an accuracy of 0.1 mm.

## Patentansprüche

1. System (60) zur Versorgung eines Zellenstapels (11), der Teil des Systems (60) bildet, mit einer Vielzahl von Fluiden und zum Entfernen derselben daraus, wobei der Zellenstapel (11) eine Vielzahl von Fluid-Anschlussstutzen (62, 62a) umfasst und das System auch ein Verbindungsmodul (68) umfasst, das eine Vielzahl von Anschlussstutzen (72) zum Anschluss an die Anschlussstutzen (62, 62a, 64) des Zellenstapels (11) definiert, mit einer Fluid-Leitung (12), die mit jedem Anschlussstutzen (72) des Verbindungsmoduls (68) in Verbindung steht, wobei es eine Vielzahl von Leitungen (12) gibt, um den Zellenstapel (11) mit Fluiden zu versorgen, und mit einem Ventil (32) in jeder Fluid-Zuführungsleitung (12) um den Fluid-Fluss durch diese Leitung (12) zu steuern,
**dadurch gekennzeichnet, dass** die Anschlussstutzen Einschubstecker und Buchsen umfassen, wobei die Buchsen (62, 62a, 64) die Stecker (72) mit begrenzter Fehlausrichtung fixieren, wobei die Buchsen (62, 62a, 64) auch eine flache Verschlussoberfläche (64) definieren und die Stecker (72) ein Dichtungselement (73) umfassen, um auf der flachen Dichtungsoberfläche (64), die durch die Buchsen (62, 62a, 64) definiert wird, abzudichten.

2. System nach Anspruch 1, des Weiteren umfassend einen Stützrahmen (30, 37) für den Zellenstapel (11), so angeordnet, dass der Zellenstapel (11) mit den Anschlussstutzen (62, 62a, 64; 72) des Zellenstapels (11) und dem angeschlossenen Verbindungsmodul (68) getragen wird.

3. System nach Anspruch 1 oder Anspruch 2, wobei die Buchsen (62, 62a, 64) eine Vertiefung bieten, deren Durchmesser 2,5 mm größer ist als der des Steckers (72).

4. System nach einem der vorhergehenden Ansprüche, wobei jedes Ventil (32) durch einen Stellantrieb betätigt wird und so verbunden ist, dass alle Ventile (32) zusammen geöffnet oder geschlossen werden können.

5. System nach Anspruch 4, wobei jeder Zellenstapel (11) ein elektronisches Überwachungsgerät (84) zum Überwachen des Betriebs jeder Zelle in dem Stapel (11) und zur Steuerung des Betriebs der Ventile (32) umfasst.

6. System nach Anspruch 4 oder Anspruch 5, wobei die Ventile (32) pneumatisch betrieben werden.

7. System nach einem der vorhergehenden Ansprüche, wobei die Stecker (72) Endflächen aufweisen, die innerhalb einer Genauigkeit von 0,1 mm in einer gemeinsamen Ebene liegen.

## Revendications

1. Système (60) pour l'alimentation et l'évacuation d'une pluralité de fluides vers une pile de cellules (11) faisant partie du système (60) et hors de celle-ci, dans lequel la pile de cellules (11) comprend une pluralité d'orifices de connexion fluidique (62, 62a) ; et le système comprenant en outre un module de connexion (68) définissant une pluralité d'orifices de connexion (72) destinés à s'accoupler avec les orifices de connexion (62, 62a, 64) de la pile de cellules (11), avec un conduit de fluide (12) communiquant avec chaque orifices de connexion (72) du module de connexion (68), une pluralité de conduits (12) étant prévue pour alimenter des fluides vers la pile de cellules (11), et avec une valve (32) dans chaque conduit d'alimentation de fluide (12) pour contrôler l'écoulement de fluide à travers ce conduit (12),
**caractérisé en ce que** les orifices de connexion comprennent des connecteurs enfichables mâle et femelle, le connecteur femelle (62, 62a, 64) positionnant le connecteur mâle (72) tout en tolérant un décalage limité, le connecteur femelle (62, 62a, 64) définissant également une surface d'étanchéité plane (64), et le connecteur mâle (72) comprenant un élément d'étanchéité (73) destiné à s'appliquer sur la surface d'étanchéité plane (64) définie par le connecteur femelle (62, 62a, 64).

2. Système selon la revendication 1, comprenant également un cadre de support (30, 37) pour la pile de cellules (11), arrangé pour supporter la pile de cellules (11) avec les orifices de connexion (62, 62a, 64 ; 72) de la pile de cellules (11) et du module de connexion (68) alignés.

3. Système selon la revendication 1 ou la revendication 2, dans lequel le connecteur femelle (62, 62a, 64) fournit une cavité dont le diamètre est plus grand de 2,5 mm que celui du connecteur mâle (72).

4. Système selon l'une quelconque des revendications précédentes, dans lequel chaque valve (32) est commandée par un actionneur, et reliée de manière à ce que toutes les valves (32) puissent être ouvertes ou fermées conjointement.

5. Système selon la revendication 4, dans lequel chaque pile de cellules (11) comprend un moniteur électronique (84) destiné à contrôler le fonctionnement de chaque cellule dans la pile (11), et à contrôler le fonctionnement des valves (32).

6. Système selon la revendication 4 ou la revendication 5, dans lequel les valves (32) sont commandées de façon pneumatique.

7. Système selon l'une quelconque des revendications précédentes, dans lequel les connecteurs mâles (72) présentent des faces terminales situées dans un plan commun, avec une précision de 0,1 mm.
